# EUROPÄISCHE PATENTSCHRIFT

(11) **EP 1 976 735 B1**
(45) Veröffentlichungstag und Bekanntmachung des Hinweises auf die Patenterteilung: **21.03.2012**
(21) Anmeldenummer: 06819648.4
(22) Anmeldetag: 21.11.2006
(51) Int. Cl.: B60S 1/04

(54) **SCHEIBENWISCHVORRICHTUNG, INSBESONDERE FÜR EIN KRAFTFAHRZEUG**
WIPER DEVICE, IN PARTICULAR A MOTOR VEHICLE
DISPOSITIF ESSUIE-GLACE, NOTAMMENT POUR VEHICULE AUTOMOBILE

(30) Priorität: 13.01.2006 DE 102006001963; 30.03.2006 DE 102006015240
(43) Veröffentlichungstag der Anmeldung: 08.10.2008
(73) Patentinhaber: Robert Bosch GmbH, 70442 Stuttgart (DE)
(72) Erfinder: METZ, Ulrich, 77855 Achern (DE)
(86) Internationale Anmeldenummer: PCT/EP2006/068719
(87) Internationale Veröffentlichungsnummer: WO 2007/087908

(56) Entgegenhaltungen:
- EP-A2- 1 270 350
- WO-A-02/04263
- DE-A1- 3 116 821

## Beschreibung

### Stand der Technik

Die Erfindung betrifft eine Scheibenwischvorrichtung, insbesondere für ein Kraftfahrzeug, nach Gattung des unabhängigen Anspruchs.

Aus der DE-A-198 09 630 ist eine Scheibenwischvorrichtung bekannt, die ein erstes Befestigungsmittel, ein zweites Befestigungsmittel und ein drittes Befestigungsmittel, zur Befestigung der Scheibenwischvorrichtung an der Karosserie des Kraftfahrzeugs aufweist. Zwischen den befestigungsmitteln ist hierzu eine Platine angeordnet, die die wesentlichen Komponenten, beispielsweise den Antrieb und die Wischerlager mit den Wischerwellen, der Scheibenwischvorrichtung trägt. Das dritte Befestigungsmittel ist hierbei außerhalb der durch das erste und zweite Befestigungsmittel gebildeten Achse im Bereich des Antriebs der Scheibenwischvorrichtung angeordnet. Es weist darüber hinaus ein Verstellmittel zur Verkippung der Platine um einen Kippwinkel um die durch das erste und zweite Befestigungsmittel gebildete Achse auf. Hierzu ist als Verstellmittel ein gewindeartiges Dämpfungselement vorgesehen, das mit der Platine zusammenwirkt. Durch Drehung des Dämpfungselements wird der Kippwinkel der Platine gegenüber der Karosserie des Kraftfahrzeugs verstellt, so dass sich der Winkel zwischen der Scheibe des Kraftfahrzeugs und der Pendelachse der Wischerwellen verändert um ein optimales Wischbild zu erzielen.

Durch das Verstellmittel können beispielsweise Fertigungstoleranzen, die aus der Herstellung der Karosserie resultieren, ausgeglichen werden.

Problematisch ist hierbei jedoch die relativ komplizierte Einstellung des Kippwinkels, da die Befestigung nach der Einstellung des Kippwinkels fixiert werden muss. Häufig kommt es bei der Fixierung des Dämpfungselements wiederum zu Veränderungen der Einstellung, sodass eine Nachjustage erforderlich ist, oder es wird aufwendiges Spezialwerkzeug benötigt, so dass die Justage während der Fixierung zuverlässig erhalten bleibt. Die WO 02/04263 a1 schlägt vor, den Einstellvorgang durch Vorsehen einer Verzahnung zu erleichtern und so eine stufenförmige Veränderung des Kippwinkels bereitzustellen. Die Handhabung des Verstellmittels ist jedoch sehr aufwendig.

### Offenbarung der Erfindung

### Vorteile der Erfindung

Die erfindungsgemäße Scheibenwischvorrichtung mit den Merkmalen des Hauptanspruchs hat den Vorteil, dass das Verstellmittel nur vorbestimmte Kippwinkel ermöglicht. Auf diese Weise wird es vermieden, dass sich der eingestellte Kippwinkel bei der Fixierung wieder verändert und trotzdem eine genaue Einstellung des Kippwinkels ermöglicht ist.

Durch die in den Unteransprüchen aufgeführten Maßnahmen ergeben sich vorteilhafte Weiterbildungen und Verbesserungen der im Hauptanspruch angegebenen Merkmale.

Besonders vorteilhaft ist es, wenn am dritten Befestigungsmittel Rastmittel zur Vorbestimmung der vorbestimmten Kippwinkel vorgesehen sind. Rastmittel sind einfach in der Fertigung und weisen eine hohe Lebensdauer auf.

In einer einfachen Ausführung sind die Rastmittel durch Rastnocken und Raststutzen gebildet.

Eine komfortable Einstellung wird vorteilhafterweise dadurch erzielt, dass die Rastnocken und/oder Raststutzen in einer durch die Verkippung definierten Kippebene gegeneinander bewegbar sind.

Zur genauen Einstellung des Kippwinkels ist es vorteilhafterweise vorgesehen, dass die vorbestimmten Kippwinkel in Schritten von 0,5 bis 5 Grad, insbesondere 0,8 bis 3 Grad, vorzugsweise zwischen 1 und 2 Grad, vorgesehen sind.

Eine besonders sichere Verbindung wird erzielt, wenn das dritte Befestigungsmittel ein Fixierungsmittel aufweist, das mit einer Öffnung zusammenwirkt. Als Fixierungsmittel sind hier vorteilhafterweise Schraub-, Clip- oder Bügelverbindungen vorgesehen, die vorteilhafterweise mit einem, insbesondere bogenförmigen, Langloch zusammenwirken.

Eine besonders komfortable Einstellung und eine sichere Fixierung des Kippwinkels wird dadurch erzielt, dass das dritte Befestigungsmittel ein Drehelement aufweist, das um das Fixierungsmittel gedreht werden kann.

Weiterhin vorteilhaft ist es, wenn das Fixierungsmittel zwischen dem Drehelement und dem Rastmittel angeordnet ist.

In einer einfachen und kostengünstigen Ausführung weist das dritte Befestigungsmittel vorteilhafterweise einen Drehkörper auf an dem das Drehelement und der Rastnocken oder die Raststutzen angeordnet ist und der vom Fixierungsmittel getragen wird. Weiterhin ist es vorteilhaft, wenn das Fixierungsmittel im Drehpunkt des Drehkörpers angeordnet ist, insbesondere seine Drehwelle bildet.

Durch eine Drehhilfe am Drehkörper, die insbesondere als Hebel ausgebildet ist, ergibt sich vorteilhafterweise eine schnelle und komfortable Einstellung des Kippwinkels.

### Zeichnungen

Ein Ausführungsbeispiel der Erfindung ist in den Zeichnungen dargestellt und in der nachfolgenden Beschreibung näher erläutert. Es zeigen:
Figur 1 eine erfindungsgemäße Scheibenwischvorrichtung in einer perspektivischen Darstellung,
Figur 2 eine erfindungsgemäße Scheibenwischvorrichtung in einer Seitenansicht,
Figur 3 eine erfindungsgemäße Scheibenwischvorrichtung in einer Seitenansicht und
Figur 4 ein Befestigungsmittel einer erfindungsgemäßen Scheibenwischvorrichtung in einer Seitenansicht.

### Beschreibung des Ausführungsbeispiels

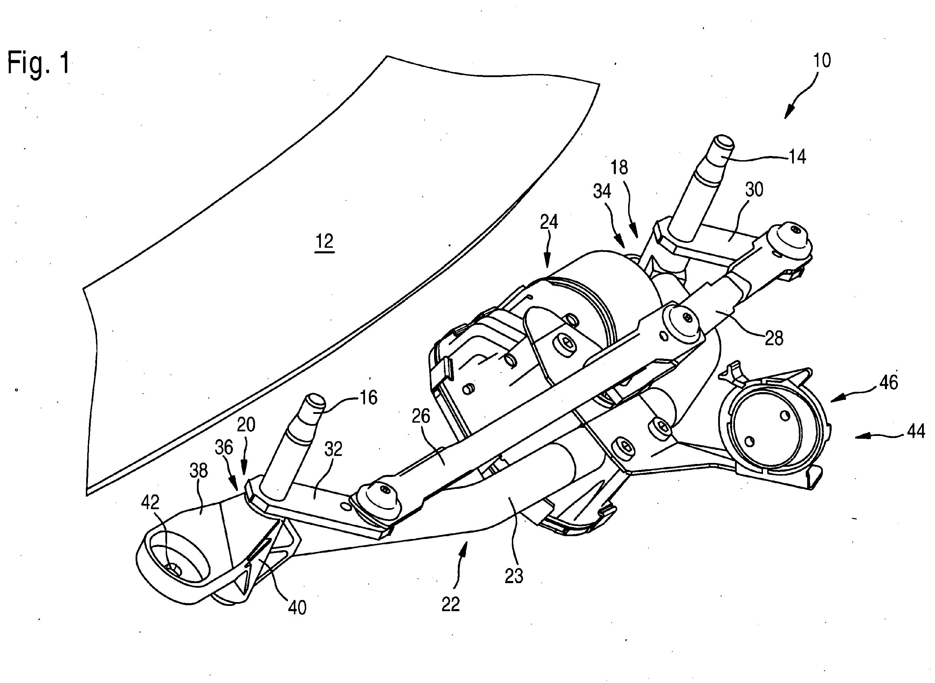

In Figur 1 ist eine erfindungsgemäße Scheibenwischvorrichtung 10 in montierter Position in einem Kraftfahrzeug gezeigt. Die Scheibenwischvorrichtung 10 ist vor einer Scheibe 12 angeordnet und an der Fahrzeugkarosserie, die hier aus Gründen der Übersichtlichkeit nicht gezeichnet ist, befestigt. Die Scheibenwischvorrichtung 10 weist eine erste Wischerwelle 14 sowie eine zweite Wischerwelle 16 auf, die aus der Karosserie herausragen und mit einer durch die Scheibe 12 gebildeten Ebene einen Kippwinkel α einschließen. Die Wischerwellen 14, 16 sind hierbei jeweils in einem ersten bzw. zweiten Wischerlager 18, 20 gelagert und durch ein Trägerrohr 23 miteinander verbunden. Am Trägerrohr 23 ist zwischen erstem Wischerlager 18 und zweitem Wischerlager 20 ein Wischermotor 24 als Antrieb befestigt, dessen Abtriebswelle über eine Mechanik aus Schubstangen 26, 28 und Kurbeln 30, 32, die Wischerwellen 14, 16 antreiben. Dadurch ist durch das Trägerrohr 23 eine Platine 22 gebildet, die die wesentlichen Komponenten, wie den Antrieb 24 und die Wischerlager 18, 20, trägt.

Im Bereich des ersten Wischerlagers 18 und damit an einem Ende der Längserstreckung der Scheibenwischvorrichtung 10, ist das erste Befestigungsmittel 34 angeordnet und bildet damit einen ersten Befestigungspunkt, an dem die Platine 22 an der Karosserie befestigt ist. Im Bereich des zweiten Wischerlagers 20 und damit am anderen Ende der Längserstreckung der Scheibenwischvorrichtung 10, ist das zweite Befestigungsmittel 36 angeordnet und bildet damit einen zweiten Befestigungspunkt für die Platine 22. Das zweite Befestigungsmittel 36, das im wesentlichen gleich wie das erste Befestigungsmittel 34 ausgebildet ist, umfaßt einen Befestigungsabschnitt 38, der einstückig mit einem die zweite Wischerwelle 16 lagernden rohrförmigen Lagerabschnitt 40 des Wischerlagers 20 ausgebildet ist.

Der Befestigungsabschnitt 38 ist von im Wesentlichen länglicher Gestalt und an einem Ende seiner Längserstreckung am Lagerabschnitt 40 befestigt. Am anderen Ende des Befestigungsabschnitts 38 ist ein Befestigungsauge 42 angeordnet, mit Hilfe dessen ein insbesondere lösbares Befestigungselement, beispielsweise eine Schraube oder ein Dreh-und/oder Steckverschluß, zur Befestigung der Platine 22 der Scheibenwischvorrichtung 10 an der Karosserie des Kraftfahrzeugs vorgesehen werden kann. Zur Dämpfung von Schwingungen sind im Bereich des Befestigungsauges 42 Dämpfungselemente vorgesehen, die hier aus Gründen der Übersichtlichkeit nicht gezeichnet sind. Diese Dämpfungselemente ermöglichen auch eine leichte Verkippung der Platine 22.

Ist die Platine 22 der Scheibenwischvorrichtung 10 mit Hilfe des ersten und zweiten Befestigungsmittels 34, 36 an der Karosserie des Kraftfahrzeugs befestigt, so kann die Platine 22 daher immer noch um eine durch die beiden Befestigungsmittel 34, 36 gebildete Achse verkippt werden. Dieser Kippwinkel ist zwar relativ klein, er umfaßt in der Regel nur wenige Grade, reicht aber aus um Fertigungstoleranzen der Fahrzeugkarosserie und der Scheibenwischvorrichtung 10 auszugleichen. Ebenso können unterschiedliche Kippwinkel α für verschiedene Fahrzeugtypen vorgesehen und eingestellt werden.

Um ein ungewolltes verkippen zu vermeiden und damit eine stabile Befestigung zu erzielen, ist ein drittes Befestigungsmittel 44 vorgesehen, das außerhalb der durch das erste Befestigungsmittel 34 und das zweite Befestigungsmittel 36 gebildeten Achse angeordnet ist. Entlang der Längserstreckung der Scheibenwischvorrichtung 10 ist das dritte Befestigungsmittel 44 im mittleren Drittel des Trägerrohrs 23, beispielsweise im Bereich des Wischermotors 24, angeordnet. Das dritte Befestigungsmittel 44 weist nun zur Einstellung des Kippwinkels α ein Verstellmittel 46 auf. Das Verstellmittel 46 ist hierbei derart ausgeführt, dass nur vorbestimmte Kippwinkel α₁, α₂ ..., αₙ ermöglicht sind.

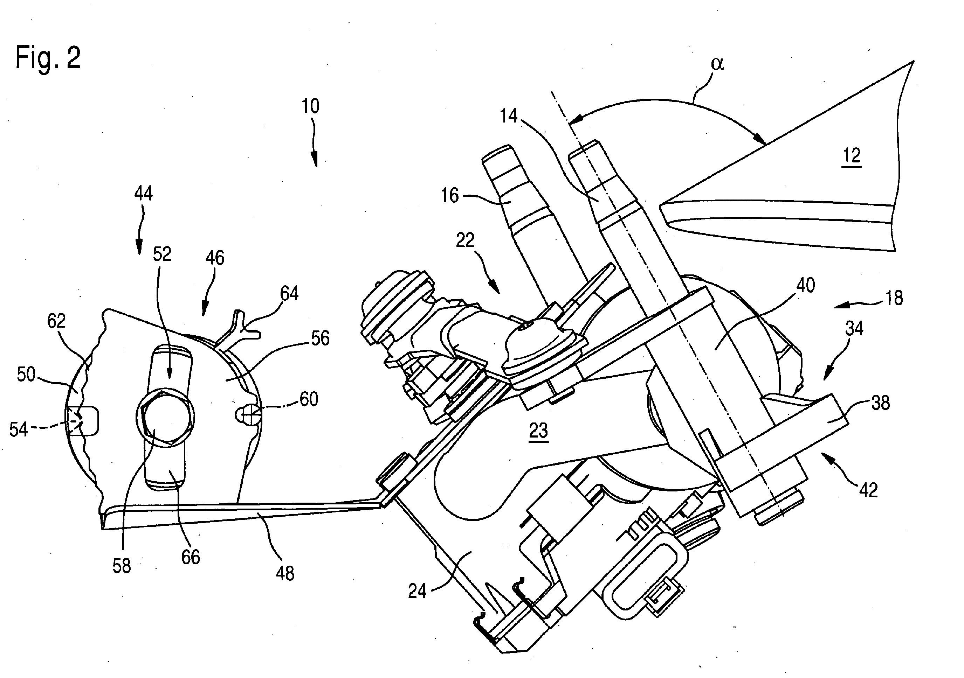

In Figur 2 ist die erfindungsgemäße Scheibenwischvorrichtung 10 sowie die Scheibe 12 in schematischer Seitenansicht gezeigt. Im Vordergrund ist das erste Wischerlager 18 mit dem Lagerabschnitt 40 und dem ersten Befestigungsmittel 34 zu sehen. Das erste Befestigungsmittel 34 umfaßt den Befestigungsabschnitt 38 und das Befestigungsauge 42. An der Platine 22 ist im Bereich des Antriebs 24 eine Befestigungsplatine 48 angeordnet, an deren freiem Ende das dritte Befestigungsmittel 44 angeordnet ist. Das dritte Befestigungsmittel 44 umfaßt hierbei das Verstellmittel 46 und ist über ein Entkopplungselement 52 mit der Fahrzeugkarosserie verbunden.

Das Verstellmittel 46 umfaßt im wesentlichen einen Drehkörper 50, an dem ein Raststutzen 54 ausgebildet ist, der in Rastnocken 56 eingreift. Weiterhin umfaßt das Verstellmittel 46 einen Rastabschnitt 56, der aus der Befestigungsplatine 48 der Platine 22, in der Ebene des Kippwinkels α herausragt und als Blechabschnitt ausgebildet ist.

Der Drehkörper 50 ist hierbei derart an der Karosserie befestigt, dass er in der Ebene des Kippwinkels α drehbar ist. Im Zentrum des Drehkörpers 50 ist hierzu ein Gewindebolzen als Fixierungsmittel 58 angeordnet. Der Rastabschnitt 56 schmiegt sich hierbei an den Drehkörper 50 seitlich, in der Kippebene an und weist ein, insbesondere gebogenes Langloch 66 auf, durch welches das den Drehkörper 50 tragende Fixierungsmittel 58 geführt ist. Zur Einstellung der vorbestimmten Kippwinkel α weist der Drehkörper 50 ein Drehelement 60 auf, das senkrecht zur Kippebene angeordnet ist. Dieses greift in eine Kerbe oder eine Öffnung als Eingriffelement 70 im Rastabschnitt 56 der Befestigungsplatine 48 ein. Auf der dem Drehelement 60 bezüglich des Fixierungsmittels 58 gegenüberliegenden Seite ist der Raststutzen 54 am Drehkörper 50 befestigt. Dieser greift in Rastnocken 62 ein, welche mit dem Raststutzen 54 des Drehkörpers 50 korrespondieren. Zur leichteren Drehung des Drehkörpers 50 ist ein Hebel als Drehhilfe 64 angeordnet. Die Drehhilfe 64 ist hierbei so ausgebildet beziehungsweise angeordnet, daß durch das Hebelgesetz einerseits eine sichere Rastung zwischen Raststutzen 54 und Rastnocken 62 gegeben ist, andererseits der Drehkörper 50 durch einen Monteur ohne Werkzeug verstellt werden kann. Dadurch kann ein zufälliges verdrehen des Drehkörpers 50 vermieden werden.

Wird die Drehhilfe 64 betätigt, so wird der Drehkörper 50 in eine Drehung versetzt. Das Drehelement 60 bewegt sich dadurch auf einer Kreisbahn nach oben. Da das Drehelement 60 mit dem Rastabschnitt 56 der Befestigungsplatine 48 verbunden ist, wird auch der Rastabschnitt 56 nach oben gezogen, sodass sich der Kippwinkel α der Platine 22 ändert. Damit nur vorbestimmte Kippwinkel α einstellbar sind, kämmt der Raststutzen 54 die Rastnocken 62. Ist der gewünschte Kippwinkel α eingestellt, so kann das Fixierungsmittel 58, mithin die Schraube, festgezogen werden, sodaß der eingestellte Kippwinkel α nicht mehr veränderbar ist. Um die Bewegung des Rastabschnitts 56, mithin der Befestigungsplatine 48, zu ermöglichen, ist im Rastabschnitt 56 im Bereich des Fixierungsmittels 58 das Langloch 66 vorgesehen, durch das das Fixierungsmittel 58 während des Drehvorgangs zu gleiten vermag. In einer Variation der Erfindung können die Rastnocken 62 und der Raststutzen 54 auch an einer anderen Stelle des Drehkörpers 50, beispielsweise am Langloch 66 oder im Bereich des Drehelementes 60 vorgesehen sein.

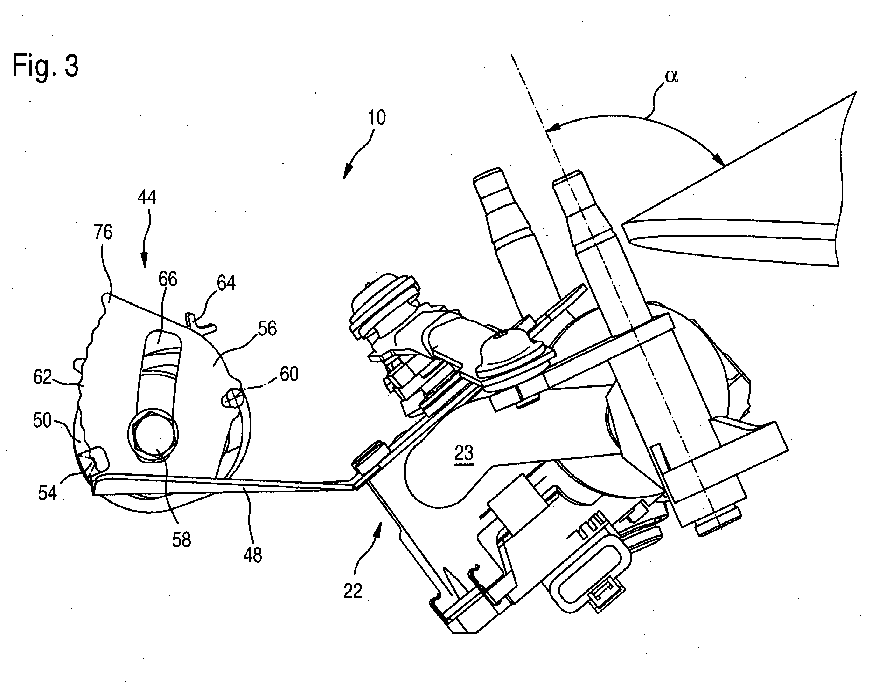

In Figur 3 ist die erfindungsgemäße Scheibenwischvorrichtung 10 mit dem dritten Befestigungsmittel 44 aus Figur 2 in einer anderen Winkelstellung gezeigt. Hierbei wurde durch den Hebel 64 der Drehkörper 50 in eine Extremposition verschoben. Der Drehkörper 50 wurde um seine Drehachse gegen den Uhrzeigersinn verdreht, sodass das Drehelement 60 ebenfalls gegen den Uhrzeigersinn nach oben verschoben wurde. Die Drehachse des Drehkörpers 50 verläuft hierbei genau durch das Fixierungsmittel 58, das den Drehkörper 50 trägt. Jedoch kann das Fixierungsmittel 58 auch an anderer Stelle angeordnet sein und beispielsweise als Steck- oder Klemmelement ausgebildet sein. Der Raststutzen 54 ist bei der Drehung des Drehkörpers 50 entlang der Rastnocken 62 ebenso gegen den Uhrzeigersinn nach unten verschoben. Durch das nach oben verschobene Drehelement 60 wurde auch der Rastabschnitt 56 und dadurch auch die Befestigungsplatine 48 nach oben verschoben und damit der Kippwinkel α in seine Minimalposition verstellt.

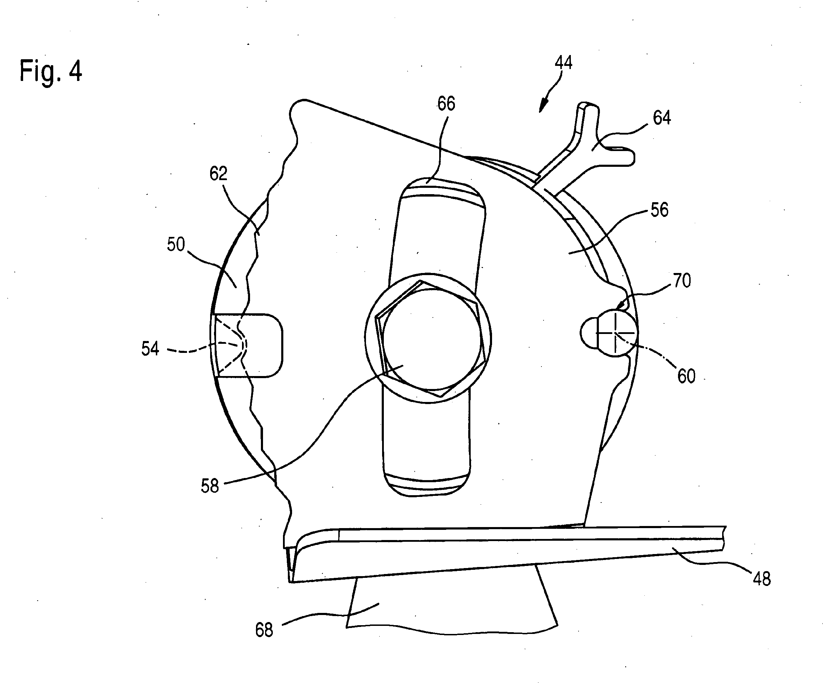

In Figur 4 ist das dritte Befestigungsmittel 44 im Detail dargestellt. Der Drehkörper 50 ist durch einen Befestigungsfuß 68 mit der Fahrzeugkarosserie verbunden. Der Befestigungsfuß 68 weist eine Öffnung auf, durch die die Schraube des Fixierungsmittel 58 verläuft und die den Drehkörper 50 trägt. Der mit der Befestigungsplatine 48 verbundene Rastabschnitt 56 ist über das Eingriffelement 70, das hier als Kerbe ausgebildet ist, drehbeweglich mit dem Drehelement 60 verbunden. Das Drehelement 60 ist exzentrisch am Drehkörper 50 angeordnet, sodaß bei einer Drehung des Drehkörpers 50 um seine Drehachse eine Verschiebung des Drehelementes 60 stattfindet. Da das Drehelement 60 drehbeweglich mit dem Eingriffelement 70 verbunden ist, verschiebt sich bei einer Drehung des Drehkörpers 50 auch das Eingriffelement 70 des Rastabschnitts 56. Damit nur vorbestimmte Kippwinkel α einstellbar sind, ist auf der dem Drehelement 60 in der Drehebene von der Drehachse abgewandten Seite des Drehkörpers 50 der Raststutzen 54 angeordnet, der durch die Drehung des Drehkörpers 50 über die Rastnocken 62 des Rastabschnitts 56 gleitet. Der Rastabschnitt 56 ist aus Blech ausgebildet. Der Raststutzen 54 ist aus Kunststoff ausgebildet, kann jedoch auch aus Metall, beispielsweise aus Blech, ausgebildet sein.

Um ein nachträgliches Verstellen des Kippwinkels α zu vermeiden, ist das Fixierungsmittel 58 vorgesehen, welches nach Einstellen des gewünschten Kippwinkels eine Fixierung ermöglicht.

Das Fixierungsmittel 58, ist zwischen dem Drehelement 60 und dem Raststutzen 54 angeordnet. Der Drehkörper 50 trägt hierbei sowohl das Drehelement 60 als auch den Raststutzen 54. Die Richtung der Fixierung also der Kraft, die die Fixierung bewirkt, wird hierbei senkrecht zur Ebene des Kippwinkels α ausgeübt, so daß die Justage bei der Fixierung erhalten bleibt.

Das durch die Rastnocken 62 und den Raststutzen 54 gebildete Rastmittel 72 kann in einer Variation der Erfindung auch umgekehrt ausgestaltet sein, sodass am Rastabschnitt 56 ein Raststutzen vorgesehen ist, der mehrere Rastnocken am Drehkörper 50 kämmt.

Der gesamte Drehkörper 50 kann aus Kunststoff, insbesondere im Spritzgußverfahren, hergestellt sein. Insbesondere kann die Drehhilfe 64 auch einstückig mit dem Drehkörper 50 ausgebildet sein.

Auf dem Rastabschnitt 56 können auch Markierungen für die einzelnen Winkelstellungen, insbesondere für die Null- oder Mittelposition, angebracht sein. Über jeden Nocken 62 kann sich der Kippwinkel α der Platine 22 der Scheibenwischvorrichtung 10 um ein Winkelgrad verändern. Insbesondere kann an dem Drehkörper 50 eine Nase 74 radial angeordnet sein, welche mit einer korrespondierenden, am Rastabschnitt 56 angeordneten weiteren Nase 76 deckungsgleich ist, wenn sich der Kippwinkel α in der Null- oder Mittelstellung befindet.

In einer weiteren Variation der Erfindung kann die Rastung auch senkrecht zur Kipprichtung angeordnet sein. Der Rastabschnitt 56 kann hierbei beispielsweise Löcher oder eine wellenförmige Anordnung aufweisen und der Raststutzen 54 sich aus der Drehebene des Drehkörpers 50 heraus in Richtung der Öffnungen des Rastabschnitts 56 erstrecken und in diese eingreifen um eine kleinere Bauform zu erzielen. Natürlich kann auch der Drehkörper 50 Vertiefungen als Rastnocken 62 aufweisen, die mit einem am Rastabschnitt 56 angeordneten, und mit den Rastnocken 62 korrespondierenden Raststutzen 54 zusammenwirken. Hier kann der Raststutzen 54 beispielsweise als Stutzen vorgesehen sein, der in den aus Blech ausgebildeten Rastabschnitt 56 eingeprägt ist.

## Patentansprüche

1. Scheibenwischvorrichtung (10), insbesondere für ein Kraftfahrzeug, mit einer Platine (22), einem ersten Befestigungsmittel (34), einem zweiten Befestigungsmittel (36) und einem dritten Befestigungsmittel (44), welches außerhalb einer Achse zwischen dem ersten Befestigungsmittel (34) und dem zweiten Befestigungsmittel (36) angeordnet ist und das erste, zweite und dritte Befestigungsmittel (34, 36, 44) zur Befestigung der Platine (22) am Kraftfahrzeug vorgesehen sind, derart, dass das dritte Befestigungsmittel (44) Verstellmittel (46) zur Verkippung um einen Kippwinkel (α) der Platine (22) um die Achse aufweist, wobei das Verstellmittel (46) nur vorbestimmte Kippwinkel (α) ermöglicht sind, **dadurch gekennzeichnet, dass** das dritte Befestigungsmittel (44) ein Drehelement (60) aufweist, das um ein an dem Befestigungsmittel vorgesehenes Fixierungsmittel (58), insbesondere eine Schraub-, Clip-oder Bügelverbindung das mit einer Öffnung zusammenwirkt, gedreht werden kann.

2. Scheibenwischvorrichtung (10), nach Anspruch 1, **dadurch gekennzeichnet, dass** am dritten Befestigungsmittel (44) Rastmittel (22, 24) zur Vorbestimmung der vorbestimmten Kippwinkel (α) vorgesehen sind.

3. Scheibenwischvorrichtung (10) nach Anspruch 2, **dadurch gekennzeichnet, dass** die Rastmittel (22, 24) durch Rastnocken (62) und Raststutzen (54) gebildet sind.

4. Scheibenwischvorrichtung (10) nach Anspruch 3, **dadurch gekennzeichnet, dass** die Rastnocken (62) und/oder Raststutzen (54) in einer durch die Verkippung definierten Ebene gegeneinander bewegbar sind.

5. Scheibenwischvorrichtung (10) nach mindestens einem der vorhergehenden Ansprüche, **dadurch gekennzeichnet, dass** die vorbestimmten Kippwinkel (α) in Schritten von 0,5 Grad bis 5 Grad, insbesondere 0,8 Grad bis 3 Grad, vorzugsweise zwischen 1 Grad und 2 Grad vorgesehen sind.

6. Scheibenwischvorrichtung (10) nach mindestens einem der vorhergehenden Ansprüche, dadurch gekenntzeichnet, dass die Offnung, ein bogenförmiges Langloch (66) ist.

7. Scheibenwischvorrichtung (10) nach mindestens einem der vorhergehenden Ansprüche, **dadurch gekennzeichnet, dass** das Fixierungsmittel (58) zwischen Drehelement (60) und Rastmittel (22, 24) angeordnet ist.

8. Scheibenwischvorrichtung (10) nach mindestens einem der vorhergehenden Ansprüche, **dadurch gekennzeichnet, dass** das dritte Befestigungsmittel (44) einen Drehkörper (50) aufweist, an dem das Drehelement (60) und der Rastnocken (62) oder die Raststutzen (54) angeordnet sind und der vom Fixierungsmittel (58) getragen ist.

9. Scheibenwischvorrichtung (10) nach mindestens einem der vorhergehenden Ansprüche, **dadurch gekennzeichnet, dass** der Drehkörper (50) eine Drehhilfe (64), insbesondere einen Hebel, aufweist.

## Claims

1. Wiper device (10), in particular for a motor vehicle, with a plate (22), a first fastening means (34), a second fastening means (36) and a third fastening means (44), which is arranged outside an axis between the first fastening means (34) and the second fastening means (36), and the first, second and third fastening means (34, 36, 44) are provided for fastening the plate (22) to the motor vehicle, such that the third fastening means (44) has adjusting means (46) for tilting about the axis by a tilting angle (α) of the plate (22), wherein the adjusting means (46) permits only predetermined tilting angles (α), **characterized in that** the third fastening means (44) has a rotating element (60) which can be rotated about a fixing means (58), in particular a screw, clip or clamp connection, which is provided on the fastening means and interacts with a opening.

2. Wiper device (10) according to Claim 1, **characterized in that** latching means (22, 24) for predetermining the predetermined tilting angles (α) are provided on the third fastening means (44).

3. Wiper device (10) according to Claim 2, **characterized in that** the latching means (22, 24) are formed by latching cams (62) and latching connectors (54).

4. Wiper device (10) according to Claim 3, **characterized in that** the latching cams (62) and/or latching connectors (54) are movable relative to one another in a plane defined by the tilting.

5. Wiper device (10) according to at least one of the preceding claims, **characterized in that** the predetermined tilting angles (α) are provided in steps of 0.5 degree to 5 degrees, in particular 0.8 degree to 3 degrees, preferably between 1 degree and 2 degrees.

6. Wiper device (10) according to at least one of the preceding claims, **characterized in that** the opening is a curved slot (66).

7. Wiper device (10) according to at least one of the preceding claims, **characterized in that** the fixing means (58) is arranged between the rotating element (60) and latching means (22, 24).

8. Wiper device (10) according to at least one of the preceding claims, **characterized in that** the third fastening means (44) has a rotating body (50) on which the rotating element (60) and the latching cam (62) or the latching connectors (54) are arranged and which is supported by the fixing means (58).

9. Wiper device (10) according to at least one of the preceding claims, **characterized in that** the rotating body (50) has a rotational aid (64), in particular a lever.

## Revendications

1. Dispositif d'essuie-glace (10), en particulier pour un véhicule automobile, comprenant une platine (22), un premier moyen de fixation (34), un deuxième moyen de fixation (36) et un troisième moyen de fixation (44) qui est disposé en dehors d'un axe s'étendant entre le premier moyen de fixation (34) et le deuxième moyen de fixation (36), et les premier, deuxième et troisième moyens de fixation (34, 36, 44) étant prévus pour la fixation de la platine (22) sur le véhicule automobile, de telle sorte que le troisième moyen de fixation (44) comprenne un moyen de réglage (46) destiné à faire basculer la platine (22) autour de l'axe selon un angle de basculement (α), le moyen de réglage (46) ne permettant que des angles de basculement (α) prédéterminés, **caractérisé en ce que** le troisième moyen de fixation (44) comprend un élément rotatif (60) qui peut être tourné autour d'un moyen d'immobilisation (58) prévu sur le moyen de fixation, en particulier une liaison par vissage, enclipsage ou bridage qui coopère avec une ouverture.

2. Dispositif d'essuie-glace (10) selon la revendication 1, **caractérisé en ce que** des moyens d'encliquetage (22, 24) sont prévus sur le troisième moyen de fixation (44) pour prédéterminer les angles de basculement (α) prédéterminés.

3. Dispositif d'essuie-glace (10) selon la revendication 2, **caractérisé en ce que** les moyens d'encliquetage (22, 24) sont formés par des cames d'encliquetage (62) et des tubulures d'encliquetage (54).

4. Dispositif d'essuie-glace (10) selon la revendication 3, **caractérisé en ce que** les cames d'encliquetage (62) et/ou les tubulures d'encliquetage (54) peuvent être déplacées les unes par rapport aux autres dans un plan défini par le basculement.

5. Dispositif d'essuie-glace (10) selon au moins l'une quelconque des revendications précédentes, **caractérisé en ce que** les angles de basculement (α) prédéterminés sont prévus en incréments de 0,5 degré à 5 degrés, en particulier de 0,8 degré à 3 degrés, de préférence entre 1 degré et 2 degrés.

6. Dispositif d'essuie-glace (10) selon au moins l'une quelconque des revendications précédentes, **caractérisé en ce que** l'ouverture est un trou oblong (66) arqué.

7. Dispositif d'essuie-glace (10) selon au moins l'une quelconque des revendications précédentes, **caractérisé en ce que** le moyen d'immobilisation (58) est disposé entre l'élément rotatif (60) et les moyens d'encliquetage (22, 24).

8. Dispositif d'essuie-glace (10) selon au moins l'une quelconque des revendications précédentes, **caractérisé en ce que** le troisième moyen de fixation (44) comprend un corps rotatif (50), sur lequel l'élément rotatif (60) et les cames d'encliquetage (62) ou les tubulures d'encliquetage (54) sont disposés, et qui est porté par le moyen d'immobilisation (58).

9. Dispositif d'essuie-glace (10) selon au moins l'une quelconque des revendications précédentes, **caractérisé en ce que** le corps rotatif (50) comprend un auxiliaire de rotation (64), notamment un levier.
